# FASCICULE DE BREVET EUROPEEN

(11) **EP 4 153 479 B1**
(45) Date de publication et mention de la délivrance du brevet: **12.11.2025**
(21) Numéro de dépôt: 21727439.8
(22) Date de dépôt: 18.05.2021
(51) Int. Cl.: B64C 25/00, B64C 25/40, B64C 25/42, B64D 45/02, H02G 13/00

(54) **ATTERRISSEUR POURVU D'UNE PROTECTION PARAFOUDRE**
FAHRWERK, AUSGERÜSTET MIT EINEM BLITZSCHUTZ
LANDING GEAR COMPRISING A LIGHTNING PROTECTION

(30) Priorité: 20.05.2020 FR 2005194
(43) Date de publication de la demande: 29.03.2023
(73) Titulaire: Safran Landing Systems, 78140 Vélizy-Villacoublay (FR)
(72) Inventeur: LIEGEOIS, Pierre-Yves, 77550 MOISSY-CRAMAYEL (FR)
(74) Mandataire: Cabinet Boettcher
(86) Numéro de dépôt international: PCT/EP2021/063203
(87) Numéro de publication internationale: WO 2021/233949

(56) Documents cités:
- EP-A1- 1 544 104
- EP-A1- 3 560 827
- US-A- 3 416 027
- US-A1- 2019 170 338

## Description

### DOMAINE DE L'INVENTION

L'invention concerne le domaine de la protection des aéronefs et plus particulièrement les dispositifs pare-foudre pour atterrisseurs.

### ARRIERE PLAN DE L'INVENTION

Classiquement, un atterrisseur d'aéronef comprend une ou plusieurs paires de roues montées sur une jambe d'atterrisseur et un dispositif de freinage relié à l'aéronef par des conduites hydrauliques métalliques et/ou des câbles électriques de commande et/ou de puissance. Ces éléments sont électriquement conducteurs et sont protégés de la foudre en étant positionnés à l'intérieur d'un volume délimité par la périphérie des roues.

Or, il est prévu de disposer entre les roues un actionneur électrique de taxiage permettant de motoriser la rotation des roues. Il est donc nécessaire de déplacer les conduites hydrauliques métalliques et/ou des câbles électriques de commande et/ou de puissance pour contourner le volume de l'actionneur. Les conduites hydrauliques métalliques et/ou les câbles électriques de commande et/ou de puissance se trouvent alors en bordure du volume délimité par la périphérie des roues et sont alors susceptibles de conduire la foudre dans le système électrique de l'aéronef.

Il est connu du document EP-A-3560827 un atterrisseur d'aéronef comprenant une paire de roues entre lesquelles est placé un actionneur électrique partiellement recouvert d'un capot parafoudre.

### OBJET DE L'INVENTION

L'invention a pour objet de sécuriser l'installation d'un actionneur de taxiage sur un atterrisseur d'aéronef vis-à-vis des effets de la foudre.

### RESUME DE L'INVENTION

A cet effet, on prévoit, un atterrisseur d'aéronef selon la revendication 1.

Avantageusement, les moyens de liaison électrique comprennent une liaison mécanique rigide du capot à l'actionneur.

Selon un mode de réalisation préféré, les moyens de liaison électrique comprennent une première tresse de masse s'étendant entre le conducteur de masse et un premier point de liaison au capot parafoudre, le premier point de liaison étant situé en partie inférieure du capot parafoudre lorsque l'atterrisseur est dans un état déployé. Au sens de la demande, l'atterrisseur est dans son état déployé lorsqu'il est hors de la carlingue de l'aéronef prêt à assurer la liaison de l'aéronef avec le sol.

Avantageusement encore les moyens de liaison électrique comprennent une deuxième tresse de masse pour s'étendre entre le conducteur de masse et un deuxième point de liaison au capot parafoudre, le deuxième point de liaison étant situé en partie supérieure du capot parafoudre lorsque l'atterrisseur est dans un état déployé.

La protection est améliorée lorsque le capot parafoudre comprend une première portion de capot et une deuxième portion de capot montées mobiles l'une par rapport à l'autre qui permettent d'accompagner les courbures des réseaux électriques ou hydrauliques souples lors du coulissement de l'atterrisseur quand celui-ci entre en contact avec le sol. Le cheminement électrique de la foudre est réduit lorsqu'une troisième tresse de masse s'étend entre la première portion de capot et la deuxième portion de capot. Le capot peut suivre les mouvements de l'atterrisseur lorsque la première portion de capot et la deuxième portion de capot sont articulées l'une par rapport à l'autre et/ou que la première portion de capot et la deuxième portion de capot sont montées à coulissement l'une par rapport à l'autre.

La réalisation du capot est particulièrement économique lorsque la matrice isolante comprend de la fibre de verre et/ou lorsque la matrice isolante comprend du carbone et/ou de la résine époxy.

Avantageusement, le plot métallique peut être collé sur la matrice isolante.

Une réalisation économique du capot est obtenue lorsque les moyens de liaison électrique du conducteur électrique comprennent un cadre métallique solidaire du capot.

Selon un mode de réalisation particulier, les moyens de liaison électrique du conducteur électrique comprennent une liaison mécanique de la première tresse de masse et/ou de la deuxième tresse de masse au capot parafoudre.

L'invention s'applique également à un aéronef comprenant un tel atterrisseur.

D'autres caractéristiques et avantages de l'invention ressortiront à la lecture de la description qui suit de modes de réalisation particuliers non limitatifs de l'invention.

### BREVE DESCRIPTION DES DESSINS

- La figure 1 est une vue schématique de côté d'un atterrisseur selon un premier mode de réalisation de l'invention ;
- la figure 2 est une vue schématique de face de l'atterrisseur de la figure 1 ;
- la figure 3 est une vue schématique de face du capot de l'atterrisseur de la figure 1 ;
- la figure 4 de côté du capot de la figure 3 ;
- la figure 5 est une vue schématique de détail en coupe du capot des figures 3 et 4 ;
- la figure 6 est une vue schématique de côté d'un atterrisseur selon un deuxième mode de réalisation de l'invention ;
- la figure 7 est une vue schématique en coupe d'un troisième mode de réalisation d'un capot pour atterrisseur selon l'invention.

### DESCRIPTION DETAILLEE DE L'INVENTION

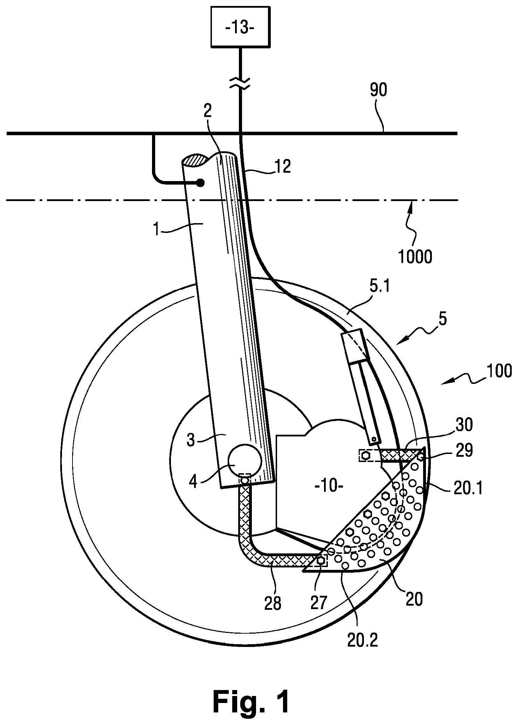

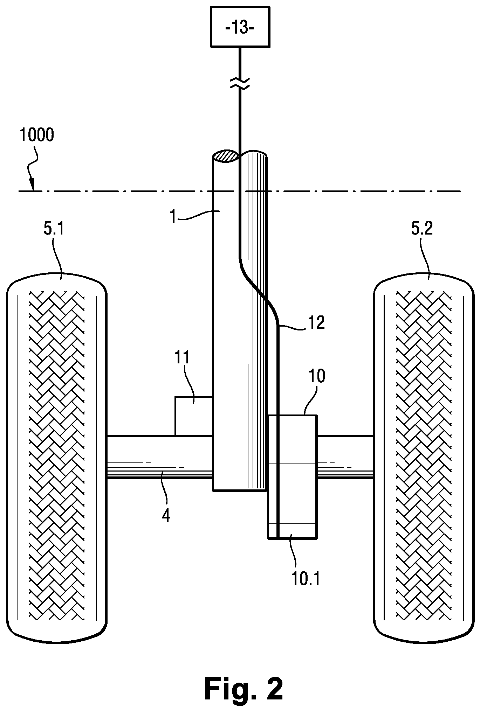

En référence aux figures 1 à 4, l'atterrisseur selon l'invention, généralement désigné en 100, équipe un aéronef 1000 et comprend une jambe 1 reliée en sa première extrémité 2 à l'aéronef de manière à pouvoir adopter une position déployée (représentée en figure 1) en saillie de la carlingue de l'aéronef 1000 et une position rétractée dans laquelle la jambe est comprise dans le volume de la carlingue de l'aéronef 1000. La jambe 1 a une deuxième extrémité 3 qui comprend un essieu 4 sur lequel est montée une paire de roues 5 comprenant une roue gauche 5.1 et une roue droite 5.2. Un actionneur électrique 10 dont le bâti 10.1 est solidaire de la jambe 1 s'étend entre la roue gauche 5.1 et la roue droite 5.2 et est situé à l'arrière de la jambe 1, relativement au sens de vol de l'aéronef 1000. L'essieu 4 porte également un dispositif de freinage 11 de la paire de roues 5. Un faisceau électrique 12 relie l'actionneur 10 et le dispositif de freinage 11 à un système électrique 13 de l'aéronef 1000. L'aéronef est pourvu d'un circuit de masse 90 auquel est électriquement relié la jambe 1 réalisée en un matériau électriquement conducteur. Ainsi, le bâti 10.1 de l'actionneur 10 est électriquement relié au circuit de masse 90.

Comme visible en figure 1, et selon un premier mode de réalisation de l'invention, un premier capot parafoudre 20, inférieur, s'étend autour d'un quadrant inférieur de l'actionneur 10 et recouvre une portion du faisceau électrique 12 qui s'étend le long de l'actionneur 10. Le capot parafoudre 20 comprend un cadre métallique 21, ici de forme rectangulaire, dont le bord longitudinal droit 22 et le bord longitudinal gauche 23 comprennent respectivement trois perçages 22.1, 22.2, 22.3 et trois perçages 23.1, 23.2 et 23.3. Les trois perçages 22.1, 22.2, 22.3 et les trois perçages 23.1, 23.2 et 23.3 accueillent respectivement des vis de fixation à l'actionneur 10.

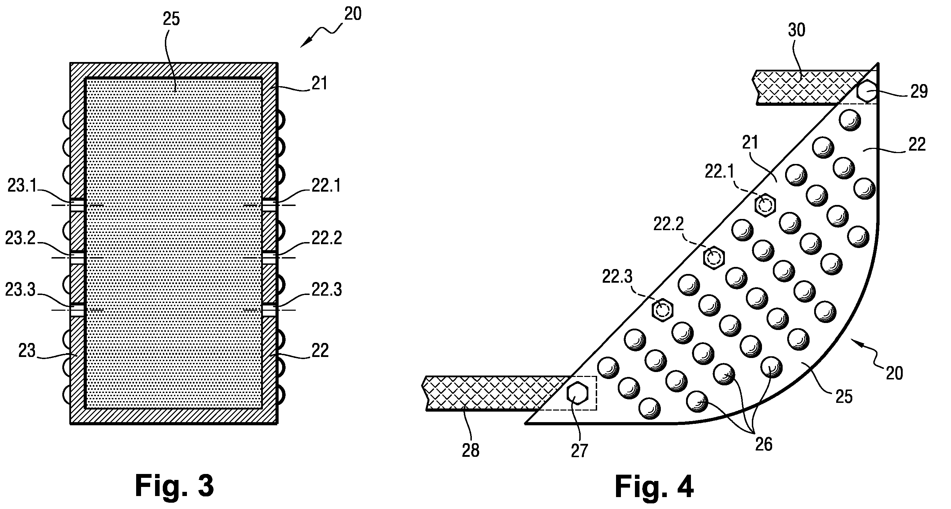

Le cadre métallique 21 est noyé dans une matrice isolante 25 comprenant de la fibre de verre et qui constitue l'enveloppe du premier capot 20. L'enveloppe du premier capot 20 a une section verticale (selon les représentations des figures 1 et 4) sensiblement en forme de triangle rectangle. Le premier capot 20 comprend alors une face arrière 20.1 sensiblement verticale et une surface inférieure 20.2 qui s'étend horizontalement.

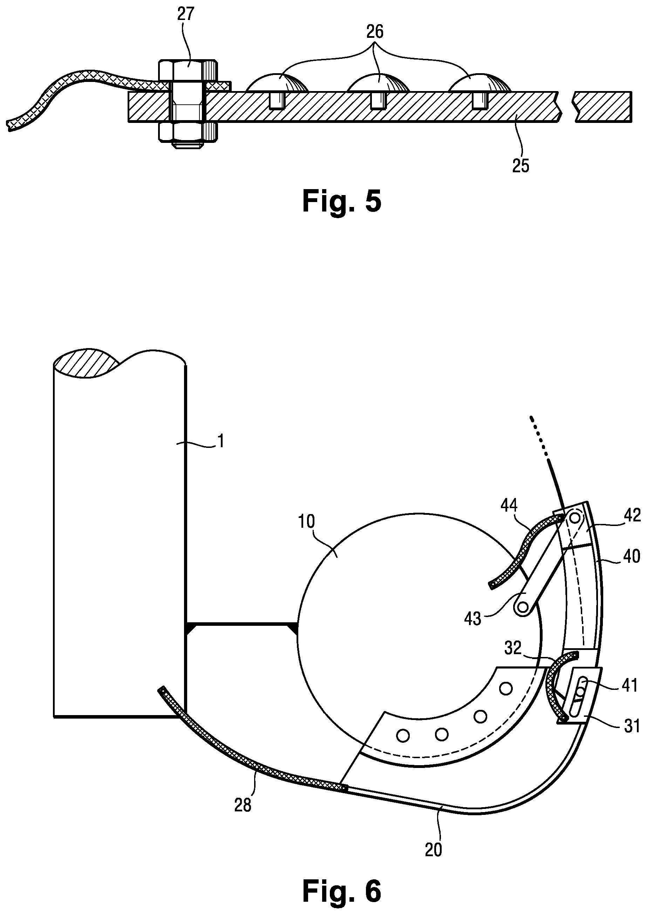

Comme visible en figure 4, une pluralité de plots conducteurs 26, ici en cuivre, sont collés sur la matrice 25. Un premier boulon conducteur 27 situé en partie inférieure du premier capot 20 lorsque l'atterrisseur 100 est dans son état déployé et en contact avec le sol (figures 1 et 5) est relié à une première tresse de masse 28. La première tresse de masse 28 est reliée par vissage à la jambe 1. Le premier boulon 27 constitue un premier point de liaison du premier capot 20 au circuit de masse 90.

Un deuxième boulon conducteur 29 situé en partie supérieure du premier capot 20 lorsque l'atterrisseur 100 est dans son état déployé (figures 1 et 5) est relié à une deuxième tresse de masse 30. La deuxième tresse de masse 30 est reliée par vissage au bâti 10.1 de l'actionneur 10. Le deuxième boulon 29 constitue un deuxième point de liaison du premier capot 20 au circuit de masse 90.

En fonctionnement, lorsque l'aéronef 1000 se trouve sur le trajet d'un éclair (en vol ou au sol), l'éclair part depuis le sol et frappe alors un point bas de l'aéronef 1000. Le premier capot 20 étant le point conducteur le plus bas de l'aéronef 1000, le point d'impact de l'éclair se situe sur la surface inférieure 20.2 du premier capot 20. L'implantation de la première tresse 28 permet de minimiser la longueur du cheminement de l'éclair sur le premier capot 20 jusqu'à ce qu'il soit dirigé vers le circuit de masse 90 de l'aéronef 1000. Lors du déplacement de l'aéronef 1000 vers l'avant, le point d'impact de l'éclair chemine le long de la surface inférieure 20.2 du premier capot 20, d'avant en arrière et se déplace ensuite sur la face arrière 20.1 du premier capot 20. L'implantation de la deuxième tresse 30 permet de minimiser la longueur du cheminement de l'éclair sur le premier capot 20 jusqu'à ce qu'il soit dirigé vers le circuit de masse 90 de l'aéronef 1000.

On obtient ainsi un dispositif assurant une protection du faisceau électrique 12 vis-à-vis de la foudre. Le dispositif de l'invention protège également très efficacement lors d'un chemin inverse (départ de l'éclair depuis le ciel) de la foudre.

Les éléments identiques ou analogues à ceux précédemment décrits porteront une référence numérique identique à ces derniers dans la description qui suit des deux autres modes de réalisation de l'invention.

Selon un deuxième mode de réalisation représenté en figure 6, un deuxième capot parafoudre 40, supérieur, est articulé sur le premier capot 20 inférieur à l'aide d'un pivot 41 solidaire du deuxième capot 40 et monté à coulissement dans un couple de rainures 31 solidaires du premier capot 20. Une partie supérieure 42 du deuxième capot 40 est reliée par une bielle 43 articulée sur l'actionneur 10.

Une troisième tresse de masse 32 s'étend entre le premier capot 20 et le deuxième capot 40. Une quatrième tresse de masse 44 s'étend également entre le capot supérieur 40 et l'actionneur 10.

On comprend qu'ainsi le premier capot 20 constitue une portion inférieure de capot parafoudre et le deuxième capot 40 constitue une portion supérieure de capot parafoudre.

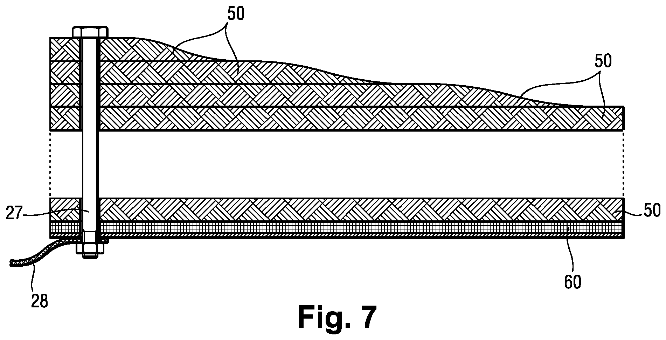

Comme montré en figure 7, la matrice isolante 25 peut comprendre du carbone et/ou de la résine époxy, en plus ou en substitution de la fibre de verre des modes de réalisations précédents. Un tel matériau peut être réalisé par un empilement de couches 50 de tissu qui seront imprégnées de résine.

Comme visible en figure 7, les plots conducteur 26 ont été remplacés par un treillis métallique 60, ce qui ne fait pas partie de l'invention, qui comprend, ici, du bronze. Une couche de peinture 70 peut optionnellement recouvrir le treillis métallique 60. Cette option s'applique également aux modes de réalisations comprenant des plots métalliques.

Bien entendu, l'invention n'est pas limitée aux modes de réalisation décrits mais englobe toute variante entrant dans le champ de l'invention telle que définie par les revendications.

En particulier :
- bien qu'ici le capot comprenne un cadre métallique, l'invention s'applique également à d'autres moyens de liaison électrique du conducteur électrique à un conducteur de masse de l'aéronef comme par exemple un treillis métallique, une barre conductrice ou tout autre élément conducteur ;
- bien qu'ici le capot comprenne des boulons conducteurs, l'invention s'applique également à d'autres moyens de liaison électrique du conducteur électrique du capot à un conducteur de masse de l'aéronef, comme par exemple une vis, une patte de liaison scellée dans le capot ou soudée sur le cadre métallique ;

- bien qu'ici les tresses de masse soient reliées au circuit de masse de l'aéronef par des boulons conducteurs, l'invention s'applique également à d'autres types de liaison mécanique des tresses de masse au capot parafoudre, comme par exemple un collage, un vissage, un rivetage, un soudage, un brasage ou une application de résine ;
- bien qu'ici les liaisons électriques entre le conducteur électrique et le conducteur de masse comprennent une seule première tresse de masse, deuxième tresse de masse ou troisième tresse de masse, l'invention s'applique également à des liaisons électriques réalisées sous la forme de plusieurs éléments redondants, comme par exemple une troisième tresse de masse dédoublée.

## Revendications

1. Atterrisseur (100) d'aéronef (1000) comprenant une paire de roues (5) entre lesquelles est placé un actionneur électrique (10), l'actionneur électrique (10) étant au moins partiellement recouvert d'un capot parafoudre (20, 40), l'atterrisseur comprenant des moyens de liaison électrique (21, 27, 28, 29, 30, 32, 43) pour relier le capot parafoudre à un conducteur de masse de l'aéronef, **caractérisé en ce que** le capot parafoudre (20, 40) comprend une matrice isolante (25) sur laquelle est rapportée au moins un conducteur électrique (26) comprenant un plot métallique (26), les moyens de liaison électrique (21, 27, 28, 29, 30, 32, 43) servant à relier le conducteur électrique (26, 60) au conducteur de masse (90) de l'aéronef (1000).

2. Atterrisseur (100) selon la revendication 1, dans lequel les moyens de liaison électrique (21, 27, 28, 29, 30, 32, 43) comprennent une liaison mécanique rigide du capot parafoudre (20, 40) à l'actionneur électrique (10).

3. Atterrisseur (100) selon l'une quelconque des revendications précédentes, dans lequel les moyens de liaison électrique (21, 27, 28, 29, 30, 32, 43) comprennent une première tresse de masse (28) s'étendant entre le conducteur de masse (90) et un premier point de liaison (27) au capot parafoudre (20, 40), le premier point de liaison (27) étant situé en partie inférieure du capot parafoudre (20) lorsque l'atterrisseur (100) est dans un état déployé.

4. Atterrisseur (100) selon l'une quelconque des revendications précédentes, dans lequel les moyens de liaison électrique (21, 27, 28, 29, 30, 32,43) comprennent une deuxieme tresse de masse (30) s'étendre entre le conducteur de masse (90) et un deuxième point de liaison (29) au capot parafoudre (20, 40), le deuxième point de liaison (29) étant situé en partie supérieure du capot parafoudre (20, 40) lorsque l'atterrisseur (100) est dans un état déployé.

5. Atterrisseur (100) selon la revendication 3, dans lequel dans lequel les moyens de liaison électrique (21, 27, 28, 29, 30, 32, 43) du conducteur électrique (26) comprennent une liaison mécanique de la première tresse de masse (28) au capot parafoudre (20, 40).

6. Atterrisseur (100) selon la revendication 4, dans lequel dans lequel les moyens de liaison électrique (21, 27, 28, 29, 30, 32, 43) du conducteur électrique (26) comprennent une liaison mécanique de la deuxième tresse de masse (30) au capot parafoudre (20, 40).

7. Atterrisseur (100) selon l'une quelconque des revendications précédentes, dans lequel le capot parafoudre (20, 40) comprend une première portion de capot (20) et une deuxième portion de capot (40) montées mobiles l'une par rapport à l'autre.

8. Atterrisseur (100) selon la revendication 7, comprenant une troisième tresse de masse (32) s'étendant entre la première portion de capot (20) et la deuxième portion de capot (40).

9. Atterrisseur (100) selon la revendication 7 ou 8, dans lequel la première portion de capot (20) et la deuxième portion de capot (40) sont articulées l'une par rapport à l'autre.

10. Atterrisseur (100) selon l'une des revendications 7 à 9, dans lequel la première portion de capot (20) et la deuxième portion de capot (40) sont montées à coulissement l'une par rapport à l'autre.

11. Atterrisseur (100) selon l'une quelconque des revendications précédentes, dans lequel la matrice isolante (25) comprend du carbone et/ou de la résine époxy.

12. Atterrisseur (100) selon l'une quelconque des revendications précédentes, dans lequel les moyens de liaison électrique (21, 27, 28, 29, 30, 32, 43) du conducteur électrique (26) comprennent un cadre métallique (21) solidaire du capot (20, 40).

13. Aéronef (1000) comprenant un atterrisseur (100) selon l'une quelconque des revendications précédentes.

## Patentansprüche

1. Fahrwerk (100) eines Luftfahrzeugs (1000), umfassend ein Radpaar aus Rädern (5), zwischen denen ein Elektroantrieb (10) eingebaut ist, wobei der Elektroantrieb (10) zumindest teilweise von einer Blitzschutzhaube (20, 40) abgedeckt ist, wobei das Fahrwerk elektrische Verbindungsmittel (21, 27, 28, 29, 30, 32, 43) umfasst, welche die Blitzschutzhaube mit einem Masseleiter des Luftfahrzeugs verbinden, **dadurch gekennzeichnet, dass** die Blitzschutzhaube (20, 40) eine Isoliermatrix (25) umfasst, auf welcher zumindest ein elektrischer Leiter (26) angebracht ist, der ein aus Metall bestehendes Kontaktstück (26) umfasst, wobei die elektrischen Verbindungsmittel (21, 27, 28, 29, 30, 32, 43) dazu dienen, den elektrischen Leiter (26, 60) mit dem Masseleiter (90) des Luftfahrzeugs (1000) zu verbinden.

2. Fahrwerk (100) nach Anspruch 1, wobei die elektrischen Verbindungsmittel (21, 27, 28, 29, 30, 32, 43) eine starre, mechanische Verbindung zum Verbinden der Blitzschutzhaube (20, 40) mit dem Elektroantrieb (10) umfassen.

3. Fahrwerk (100) nach einem der vorhergehenden Ansprüche, wobei die elektrischen Verbindungsmittel (21, 27, 28, 29, 30, 32, 43) ein erstes Masseband (28) umfassen, das sich zwischen dem Masseleiter (90) und einer ersten Verbindungsstelle (27) zur Verbindung mit der Blitzschutzhaube (20, 40) erstreckt, wobei die erste Verbindungsstelle (27) im unteren Bereich der Blitzschutzhaube (20) angeordnet ist, wenn sich das Fahrwerk (100) in einem ausgefahrenen Zustand befindet.

4. Fahrwerk (100) nach einem der vorhergehenden Ansprüche, wobei die elektrischen Verbindungsmittel (21, 27, 28, 29, 30, 32, 43) ein zweites Masseband (30) umfassen, das sich zwischen dem Masseleiter (90) und einer zweiten Verbindungsstelle (29) zur Verbindung mit der Blitzschutzhaube (20, 40) erstreckt, wobei die zweite Verbindungsstelle (29) im oberen Bereich der Blitzschutzhaube (20, 40) angeordnet ist, wenn sich das Fahrwerk (100) in einem ausgefahrenen Zustand befindet.

5. Fahrwerk (100) nach Anspruch 3, wobei die elektrischen Verbindungsmittel (21, 27, 28, 29, 30, 32, 43) des elektrischen Leiters (26) eine mechanische Verbindung zum Verbinden des ersten Massebandes (28) mit der Blitzschutzhaube (20, 40) umfassen.

6. Fahrwerk (100) nach Anspruch **4,** wobei die elektrischen Verbindungsmittel (21, 27, 28, 29, 30, 32, 43) des elektrischen Leiters (26) eine mechanische Verbindung zum Verbinden des zweiten Massebandes (30) mit der Blitzschutzhaube (20, 40) umfassen.

7. Fahrwerk (100) nach einem der vorhergehenden Ansprüche, wobei die Blitzschutzhaube (20, 40) einen ersten Haubenabschnitt (20) und einen zweiten Haubenabschnitt (40) umfasst, die relativ zueinander beweglich angebracht sind.

8. Fahrwerk (100) nach Anspruch 7, umfassend ein drittes Masseband (32), das sich zwischen dem ersten Haubenabschnitt (20) und dem zweiten Haubenabschnitt (40) erstreckt.

9. Fahrwerk (100) nach Anspruch 7 oder 8, wobei der erste Haubenabschnitt (20) und der zweite Haubenabschnitt (40) gelenkig miteinander verbunden sind.

10. Fahrwerk (100) nach einem der Ansprüche 7 bis 9, wobei der erste Haubenabschnitt (20) und der zweite Haubenabschnitt (40) verschiebbar zueinander montiert sind.

11. Fahrwerk (100) nach einem der vorhergehenden Ansprüche, wobei die Isoliermatrix (25) Carbon und/oder Epoxidharz umfasst.

12. Fahrwerk (100) nach einem der vorhergehenden Ansprüche, wobei die elektrischen Verbindungsmittel (21, 27, 28, 29, 30, 32, 43) des elektrischen Leiters (26) einen fest mit der Blitzschutzhaube (20, 40) verbundenen Metallrahmen (21) umfassen.

13. Luftfahrzeug (1000), umfassend ein Fahrwerk (100) nach einem der vorhergehenden Ansprüche.

## Claims

1. Landing gear (100) for an aircraft (1000) comprising a pair of wheels (5) between which an electric actuator (10) is placed, the electric actuator (10) being at least partially covered by a lightning arrester cowl (20, 40), the landing gear comprising means (21, 27, 28, 29, 30, 32, 43) for electrically connecting the lightening arrester cowl to a ground conductor of the aircraft, **characterized in that** the lightening arrester cowl (20, 40) comprises an insulating matrix (25) onto which at least one electrical conductor (26) is attached, the electrical conductor (26, 60) comprising one metal pad (26), the electrical connection means (21, 27, 28, 29, 30, 32, 43) being used to connect the electrical conductor (26, 60) to the ground conductor (90) of the aircraft (1000).

2. Landing gear (100) according to claim 1, wherein the electrical connection means (21, 27, 28, 29, 30, 32, 43) comprise a rigid mechanical connection of the lightning arrester cowl (20, 40) to the electric actuator (10).

3. Landing gear (100) according to any one of the preceding claims, wherein the electrical connection means (21, 27, 28, 29, 30, 32, 43) comprise a first ground braid (28) extending between the ground conductor (90) and a first connection point (27) to the lightning arrester cowl (20, 40), the first connection point (27) being located in the lower part of the lightning arrester cowl (20) when the landing gear (100) is in a deployed state.

4. Landing gear (100) according to any one of the preceding claims, wherein the electrical connection means (21, 27, 28, 29, 30, 32, 43) comprise a second ground braid (30) to extend between the ground conductor (90) and a second connection point (29) to the lightning arrester cowl (20, 40), the second connection point (29) being located in the upper part of the lightning arrester cowl (20, 40) when the landing gear (100) is in a deployed state.

5. Landing gear (100) according to claim 3, wherein the electrical connection means (21, 27, 28, 29, 30, 32, 43) of the electrical conductor (26,60) comprise a mechanical connection of the first ground braid (28) to the lightning arrester cowl (20, 40).

6. Landing gear (100) according to claim 4, wherein the electrical connection means (21, 27, 28, 29, 30, 32, 43) of the electrical conductor (26,60) comprise a mechanical connection of the second ground braid (30) to the lightning arrester cowl (20, 40).

7. Landing gear (100) according to any one of the preceding claims, wherein the lightening arrester cowl (20, 40) comprises a first cowl portion (20) and a second cowl portion (40) movably mounted against one another.

8. Landing gear (100) according to claim 7, comprising a third ground braid (32) extending between the first cowl portion (20) and the second cowl portion (40).

9. Landing gear (100) according to claim 7 or 8, wherein the first cowl portion (20) and the second cowl portion (40) are articulated against one another.

10. Landing gear (100) according to one of claims 7 to 9, wherein the first cowl portion (20) and the second cowl portion (40) are slidingly mounted against one another.

11. Landing gear (100) according to any one of the preceding claims, wherein the insulating matrix (25) comprises carbon and/or epoxy resin.

12. Landing gear (100) according to any one of the preceding claims, wherein the electrical connection means (21, 27, 28, 29, 30, 32, 43) of the electrical conductor (26,60) comprise a metal frame (21) integral with the cowl (20, 40).

13. Aircraft (1000) comprising a landing gear (100) according to any one of the preceding claims.
